# EUROPÄISCHE PATENTSCHRIFT

(11) **EP 1 881 687 B1**
(45) Veröffentlichungstag und Bekanntmachung des Hinweises auf die Patenterteilung: **31.10.2012**
(21) Anmeldenummer: 07012231.2
(22) Anmeldetag: 22.06.2007
(51) Int. Cl.: H04M 9/00, H04M 1/60

(54) **Dezentral organisiertes, IP-basiertes Kommunikationssystem mit analogen WL-Sprechstellen**
Decentrally organised IP-based communications system with analog WL-intercom station
Système de communication IP à organisation décentralisée doté de postes téléphoniques de sortie

(30) Priorität: 17.07.2006 DE 102006033295
(43) Veröffentlichungstag der Anmeldung: 23.01.2008
(73) Patentinhaber: Ms Neumann Elektronik GmbH, 45478 Mülheim a. d. Ruhr (DE)
(72) Erfinder: Konrad, Frank, 45133 Essen (DE)
(74) Vertreter: Feder Walter Ebert

(56) Entgegenhaltungen:
- DE-A1- 10 317 106
- US-A1- 2005 232 252
- US-A1- 2006 056 386
- COMMEND INTERNATIONAL GMBH: "Issue 15" COMMEND NEWS, Februar 2005 (2005-02), Seiten 1-4, XP002479480

## Beschreibung

Die Erfindung stellt ein neues Konzept eines Kommunikationssystems mit WL- Sprechstellen (WL: wechselseitig-gerichtete Lautsprechverbindung) vor. Das Kommunikationssystem kann zudem weitere Elemente beinhalten, insbesondere Verstärker zum Anschluss von Lautsprechern, sowie Sensoren und Aktoren. Solche Kommunikationssysteme finden beispielsweise Anwendung als Industrie-Kommunikationssysteme und sind bislang derart aufgebaut, dass mehrere WL-Sprechstelten an eine Vermittlungs-Zentrale angeschlossen sind, welche die Vermittlung der Verbindungen zwischen den WL-Sprechstellen übernimmt. Neben Einzelrufen können auch Sammelrufe (z.B. für Alarmdurchsagen) an sämtliche Sprechstellen bzw. Lautsprecher gesendet werden. Nachteilig an der Verwendung einer Vermittlungs-Zentrale ist, dass bei Ausfall der Zentrale das gesamte Kommunikationssystem ausfällt, da die "Intelligenz" des System nur einmal, bzw. mit hohem Aufwand zweimal als Redundanz, zentral im System vorliegt. Ferner ist nachteilig, dass Vermittlungs-Zentralen im Grundaufbau sehr aufwändig sind und das System nur mit erhöhtem Aufwand erweiterbar ist. Des Weiteren werden für die Anschaltungen unterschiedlicher Sprechstellen in analoger oder digitaler Bauweise auch unterschiedliche Einschübe mit unterschiedlichen Schnittstellen verwendet.

Ein System mit einer mikroprozessorgesteuerten zentralen Vermittlungseinrichtung für die Durchschaltung der Ruf- und Belegtzustandssignale ist beispielsweise in der DE 28 37 950 C2 beschrieben.

Bekannte WL/EL-Kommunikationssysteme mit analogen Schnittstellen weisen zudem häufig folgende Merkmale auf:
1. WL-Systeme werden insbesondere in Umgebungen mit lauten Hintergrundgeräuschen eingesetzt. EL-Verbindungen (einseitiggerichtete Lautsprechverbindung) werden beispielsweise dann eingesetzt, wenn Ansagen nur über an Verstärker angeschlossene Lautsprecher ausgegeben werden sollen.
2. Jede analoge WL-Sprechstelle ist über eine 2-Draht a/b-Leitung mit der Vermittlungs-Zentrale verbunden. Über die a/b-Verbindung findet die Sprachkommunikation statt, wobei die Signale als NF-Signale übertragen werden.
3. Die analogen WL-Sprechstellen sind in der Linientechnik ausgeführt. Bei der Linientechnik ist jede analoge WL-Sprechstelle mit der Vermittlungszentrale über mehrere Linien verbunden, welche als 1-Draht-Leitungen ausgeführt sind. Jeder Linie ist eine Sprechstelle im Kommunikationssystem sowie eine Taste an der Sprechstelle zugeordnet, so dass durch Betätigung der Taste eine Verbindung zu der entsprechenden Sprechstelle im Kommunikationssystem aufgebaut werden kann.

Ferner kann an den nicht beteiligten Sprechstellen angezeigt werden, dass die beteiligten Sprechstellen "belegt" sind und nicht erreicht werden können oder in diesem Fall nur durch Vorrang einer anderen Sprechstelle erreichbar sind.

Als Sensoren werden z.B. Windrichtungsmesser, Windstärkemesser, Temperaturmesser, Druckmesser, Lichtschranken oder magnetische Verschlüsse verwendet. Als Aktoren können z.B. akustische oder optische Signalgeber, wie Hupen oder Warnleuchten, zum Einsatz kommen. Die Alarmsteuerung bei den bekannten Kommunikationssystemen erfolgt zentral in einer Steuereinheit.

In "Commend News, Issue 15, Februar 2005, Seiten 1-4" der Commend International GmbH wird ein IP-basiertes Kommunikationssystem beschrieben, welches mittels einer Central Unit zentral organisiert ist.

Die DE 43 34 906 A1 beschreibt ein Kommunikationssystem, bei dem Liniensignale von einer Vermitttungseinrichtung über Linienkonzentratoren zu einer zweiten Vermittlungseinrichtung übermittelt werden, wobei die Sprachsignale über eine getrennte Leitung übermittelt werden.

Es ist die Aufgabe der Erfindung, ein Kommunikationssystem bereitzustellen, welches keine Vermittlungs-Zentrale und keinen Kommunikations-Server beinhaltet und durch Vervielfachung der "Intelligenz" im System eine erhöhte Sicherheit gegenüber Ausfällen des gesamten Systems aufweist, sowie Einrichtungen zur Realisierung eines solchen Kommunikationssystems bereitzustellen.

Die Erfindung löst die Aufgabe vorrichtungsmäßig mit den Patentansprüchen 1 und 11 sowie verfahrensmäßig mit dem Patentanspruch 20.

Das erfindungsgemäße Kommunikationssystem verwendet hierzu ein IP-basiertes Netzwerk (IP: Internet Protocol). In diesem Netzwerk werden die analogen WL-Sprechstellen über Anschalteinheiten, insbesondere mit gleicher Intelligenz, angeschaltet, wobei die Anschalteinheiten eine Netzwerkschnittstelle zur Verbindung mit dem Netzwerk aufweisen. Jeder analogen WL-Sprechstelle ist somit eine Anschalteinheit zugeordnet. Die Anschalteinheit weist ein elektronisches, programmierbares Steuerelement auf, welches die Adressierung der Rufe, die Erkennung des Eingangs an die Anschalteinheit adressierter Rufe, die Erkennung der Nichterreichbarkeit anderer Anschalteinheiten des Kommunikationssystems anhand nicht an die Anschalteinheit adressierter Rufe und die Steuerung der Anschalteinheit sowie die Codierung und Decodierung der Sprachsignale für die Netzwerkübertragung leistet. An das Steuerelement ist ein NF-Element für die Anpassung von Sende- und Empfangssprachsignalen und die Entkopplung der Sende- und Empfangsrichtung angeschlossen. Die Anschalteinheit weist zudem eine NF-Schnittstelle für die Verbindung zur Übermittlung der Sprachsignale, insbesondere über eine a/b-Leitung, von und zur Sprechstelle auf. Für die Umsetzung von Liniensignalen und gegebenenfalls von Steuer- und/oder Überwachungssignalen beinhaltet die Anschalteinheit zudem ein über ein I/O-Erweiterungselement (I/O: Input/Output) an das Steuerelement angeschlossenes Linienelement, welches ferner mehrere Linien-Schnittstellen für den Anschluss von mehreren Linien von und zur Sprechstelle aufweist.

Durch das IP-basierte Netzwerk kann auf die Verwendung einer Vermittlungs-Zentrale verzichtet werden, weil die Adressierung der Rufe oder Signale und die digitalisierte NF im Kommunikationssystem von den Steuerelementen der Anschalteinheiten geleistet wird. Die Intelligenz ist somit Im System so oft vorhanden, wie Anschalteinheiten zur Verfügung stehen, wodurch ein dezentral organisiertes Kommunikationssystem entsteht. Für die analoge WL-Sprechstelle ist nicht erkennbar, dass sie an eine Anschalteinheit in einem IP-basierten Netzwerk angeschlossen ist. In einer vorteilhaften Ausgestaltung können auch Verstärker, an welche Lautsprecher angeschlossen sind, über die gleiche Anschalteinheit in das IP-basierte Netzwerk eingebunden werden. Vorteilhaft ist somit, dass die Anschalteinheit sowohl zur Anschaltung einer analogen WL-Sprechstelle als auch von Verstärkern verwendet werden kann. In dieser vorteilhaften Ausführung ist somit die Ausgestaltung der Anschalteinheit unabhängig vom Hardwaretyp des angeschlossenen Endgeräts. Der Hardwaretyp wird nur softwaremäßig berücksichtigt. Aus diesem Grund kann die Anschalteinheit ein ID-Element aufweisen, welches insbesondere mittels Jumper einstellbar ist, und welches dem Steuerelement den Hardwaretyp des angeschlossenen Endgeräts vorgibt.

Die Anschalteinheiten können über einen Switch mit dem Netzwerk verbunden sein, so dass in einfacher Weise eine lokale Konzentration von Anschalteinheiten möglich ist. Zur Erhöhung der Redundanz kann die Anschalteinheit zwei funktionsgleiche Netzwerk-Schnittstellen aufweisen, so dass sie über zwei funktionsgleiche Switche mit dem Netzwerk verbunden ist. Bei Ausfall eines Switches ist die Anschalteinheit somit noch über den zweiten Switch mit dem Netzwerk verbunden.

Die Anschalteinheit kann ferner ein digitales Sprachspeicherelement für die Speicherung von Audiodateien, wie gesprochene Texte oder Alarmtöne, aufweisen, welches insbesondere über eine USB-Schnittstelle (USB: Universal Serial Bus) eines Erweiterungsinterfaces mit dem Steuerelement verbunden ist. Als Sprachspeicherelemente können handelsübliche USB-Sticks verwendet werden.

Die Anschatteinheit kann ferner mindestens eine Schnittstelle für die Ein- und/oder Ausgabe von Status-Meldungen und mindestens ein Anzeigeelement, vorzugsweise eine LED, für die Anzeige der Status-Meldungen aufweisen.

Für den Fall dass mehr Linien an die Anschalteinheit angeschlossen werden sollen, als Linienschnittstellen vorhanden sind, kann die Anschalteinheit ein Linienerweiterungselement für die Umsetzung von weiteren Liniensignalen aufweisen, welches insbesondere über eine I²C-Schnittstelle (Inter-Integrated Circuit) eines Erweiterungsinterfaces mit dem Steuerelement verbunden ist.

Für die Synchronisation mit anderen Anschalteinheiten kann die Anschalteinheit ferner einen Taktgenerator aufweisen. Dieser kann auch für die Synchronisation mit im Folgenden beschriebenen Anschaltmoduleinheiten verwendet werden.

Hardwaremäßig kann die Anschalteinheit als Einschub für einen insbesondere 19 Zoll Baugruppenträger ausgeführt und auf eine Backplane aufgesteckt sein. Auf diese Art lässt sich ein geringer Platzbedarf für die Anschalteinheiten realisieren. Um eine einfache Installation der Anschalteinheiten zu ermöglichen, können die Netzwerkschnittstellen auf der Frontplatte des Einschubs angeordnet sein.

Das erfindungsgemäße Kommunikationssystem ermöglicht die gleichzeitige Verwendung von IP-WL-Sprechstetten und von analogen WL-Sprechstellen. Analoge WL-Sprechstellen können über die Anschalteinheiten an das Netzwerk angeschlossen werden. Es ist somit kein Umbau der Sprechstellen nötig. Es können jedoch auch IP-WL-Sprechstellen verwendet werden, in welchen die Funktionen der Anschalteinheiten bereits integriert sind. Die IP-WL-Sprechstelle weist hierzu eine Anschaltmoduleinheit auf, welche ein elektronisches, programmierbares Steuermodul für die Steuerung der Anschaltmoduleinheit, eine Netzwerk-Schnittstelle für die Verbindung zu dem Netzwerk, ein an das Steuermodul angeschlossenes NF-Modul für die Verstärkung der Mikrofon- und/oder Lautsprechersignale, und ein Tastenfeld und/oder ein Display, welche insbesondere über einem 1/0-Erweiterungsmodul mit dem Steuermodul verbunden sind, beinhaltet. Die Anschaltmoduleinheiten können vorzugsweise die gleiche Software aufweisen wie die Anschalteinheiten.

In einer vorteilhaften Ausführung ist die Ausgestaltung der Anschaltmoduleinheit unabhängig vom Hardwaretyp der IP-WL-Sprechstelle. Der Hardwaretyp wird nur softwaremäßig berücksichtigt. Aus diesem Grund kann die Anschaltmoduleinheit ein ID-Modul aufweisen, welches insbesondere mittels Jumper einstellbar ist und welches dem Steuermodul den Hardwaretyp des angeschlossenen Endgeräts vorgibt.

In zur Anschalteinheit analoger Weise können die Anschaltmoduleinheiten über einen Switch mit dem Netzwerk verbunden sein, so dass in einfacher Weise eine lokale Konzentration von Anschalteinheiten und IP-WL-Sprechstellen mit Anschaltmoduleinheiten möglich ist. Zur Erhöhung der Redundanz kann die Anschaltmoduleinheit zwei funktionsgleiche Netzwerk-Schnittstellen aufweisen, so dass sie über zwei funktionsgleiche Switche mit dem Netzwerk verbunden ist.

Ferner kann die Anschaltmoduleinheit ein digitales Sprachspeichermodul, insbesondere einen USB-Stick, für die Speicherung von Audiodateien aufweisen, welches insbesondere über eine USB-Schnittstelle eines Erweiterungsinterfaces mit dem Steuermodul verbunden ist.

Zudem kann die Anschaltmoduleinheit mindestens eine Schnittstelle für die Ein- und/oder Ausgabe von Status-Meldungen aufweisen. Insbesondere kann das Tastenfeld mindestens ein Anzeigeelement, insbesondere eine LED, für die Anzeige von Status-Meldungen aufweisen.

Für die Synchronisation mit anderen Anschalteinheiten und/oder Anschaltmoduleinheiten kann das Steuermodul einen Taktgenerator aufweisen. Ferner kann die Anschaltmoduleinheit eine Zeituhr umfassen, welche insbesondere über eine serielle Schnittstelle (z.B. 1-wire) eines Erweiterungsinterfaces mit dem Steuermodul verbunden ist.

Das kleinste erfindungsgemäße Kommunikationssystem umfasst somit mindestens ein IP-basiertes Netzwerk, mindestens eine bereits beschriebene Anschalteinheit und mindestens eine analoge WL-Sprechstelle sowie eine weitere Einrichtung wie mindestens eine weitere analoge WL-Sprechstelte oder mindestens einen Verstärker zum Anschluss von mindestens einem Lautsprecher oder mindestens eine bereits beschriebene IP-WL-Sprechstette, wobei die analogen WL-Sprechstellen und Verstärker jeweils über eine Anschalteinheit und die IP-WL-Sprechstelte über ihre Anschaltmoduleinheit mit dem Netzwerk verbunden sind.

Das Kommunikationssystem kann ferner Sensoren und/oder Aktoren aufweisen, welche mit einem I/O-Modul verbunden sind, welches eine Steuereinheit aufweist und insbesondere über einen Switch an das Netzwerk angeschlossen ist. Die Steuereinheit kann hierbei die Alarmsteuerung leisten.

An einen Verstärker können ein oder mehrere Lautsprecherkreise mit jeweils mindestens einem Lautsprecher über eine Lautsprecherkreisanschaltung angeschlossen sein. Somit ist es möglich, über einen Verstärker eine Ansage auf mehreren Lautsprechern auszugeben.

Zur Erhöhung der Redundanz kann mindestens ein Lautsprecher an einen Verstärker und einen Havarieverstärker angeschlossen sein, auf welchen im Havariefall des ersten Verstärkers umgeschaltet wird.

Wenn ein Verstärker an eine Anschalteinheit angeschlossen wird, werden die Linien im Simplexverkehr benutzt. Für die Übertragung von Steuer- und Überwachungssignalen von und zum Verstärker sind an die Linienschnittstellen Signalleitungen angeschlossen.

In einer vorteilhaften Ausgestaltung können auch die Verstärker als Einschub für einen insbesondere 19 Zoll Baugruppenträger ausgeführt und getrennt oder zusammen mit den Anschalteinheiten auf eine Backplane aufgesteckt sein.

Das Kommunikationssystem ist derart ausgelegt, dass die Anschalteinheiten und Anschaltmoduleinheiten, insbesondere die Steuerelemente und Steuermodule, mittels eines an das Netzwerk anschließbaren PCs konfiguriert werden können. Ferner kann der PC zur Anzeige von Statusmeldungen oder Störmeldungen der Anschalteinheiten und Anschaltmoduleinheiten dienen. Die Konfiguration kann über ein Funktionsprogramm erfolgen, in das beispielsweise folgende Daten eingetragen werden können:
- MAC-Adresse für jede Anschalteinheit und jede Anschaltmoduleinheit
- IP-Adresse für jede Anschalteinheit und jede Anschaltmoduleinheit
- Subnetzmaske, in der sich das System befindet
- Funktionen der einzelnen Sprechstellen und Lautsprecherverstärker

Weil das Kommunikationssystem keine Vermittlungs-Zentrale mehr benötigt, beinhaltet das erfindungsgemäße Verfahren zur Rufübertragung und/oder Signalübertragung von einer analogen oder IP-WL-Sende-Sprechstelle zu einer analogen oder IP-WL-Ziel-Sprechstelle oder zu einem Ziel-Verstärker, an welchen mindestens ein Lautsprecher angeschlossen ist, dass der Ruf oder die Signale der Sende-Sprechstelle über eine der Sende-Sprechstelle zugeordnete Sende-Anschalteinheit bzw. Anschaltmoduleinheit, über ein Netzwerk, über eine der Ziel-Sprechstelle oder dem Ziel-Verstärker zugeordnete Ziel-Anschalteinheit bzw. Ziel-Anschaltmoduleinheit an die Ziel-Sprechstelle übermittelt werden.

Die Daten in dem Netzwerk können zumindest teilweise im Broadcast-Verfahren übertragen werden. Somit kann erreicht werden, dass die Ziel-Anschalteinheit bzw. Ziel-Anschaltmoduleinheit aus den von der Sende-Anschalteinheit bzw. Sende-Anschaltmoduleinheit in das Netzwerk gesendeten Daten erkennt, dass ein an sie adressierter Ruf eingegangen ist. Damit die Funktionalität der Linientechnik erhalten bleibt, können vorzugsweise die Anschalteinheiten bzw. Anschaltmoduleinheiten, die einen nicht an sie adressierten Ruf empfangen, aus den von der Sende-Anschalteinheit bzw. Sende-Anschaltmoduleinheit in das Netzwerk gesendeten Daten erkennen, dass sowohl die Sende-Anschalteinheit bzw. Sende-Anschaltmoduleinheit als auch die Ziel-Anschalteinheit bzw. Ziel-Anschaltmoduleinheit für die Dauer des Verbindungszustands nicht erreichbar sind. Die Anschalteinheiten können diese Information über die an sie angeschlossenen Linien an die angeschlossene Sprechstelle übertragen.

Um einen schnellen Verbindungsaufbau zu erreichen, können die Daten in dem Netzwerk mittels UDP (User Datagram Protocol) übertragen werden. Vorzugsweise werden bei der Datenübermittlung nur die unteren vier Schichten des ISO-OSI-Modells verwendet. Zur Verbesserung der Echtzeitübertragung können die Daten in dem Netzwerk isochron und/oder deterministisch übertragen werden.

Damit nicht mehrere Uhrzeiten im Kommunikationssystem miteinander konkurrieren, kann für den Fall, dass mehrere Zeituhren im Kommunikationssystem enthalten sind, jeder Zeituhr eine Priorität zugeordnet sein. Die Zeituhr mit der höchsten Priorität kann dann die anderen Zeituhren synchronisieren. Als Ausdruck der Priorität kann jeder Zeituhr eine Nummer zugewiesen sein, wobei niedrigere Nummern eine höhere Priorität darstellen, so dass die IP-WL-Sprechstelle mit der geringsten Nummer für die Synchronisation verantwortlich ist. Bei Ausfall der Zeituhr mit der höchsten Priorität wird auf die Zeituhr mit der nächsthöchsten Priorität umgeschaltet.

In einer vorteilhaften Ausgestaltung können die Audio-Daten eines Sprachspeicherelements oder Sprachspeichermoduls für das Netzwerk zur Verfügung gestellt werden, so dass sie dezentral in das Netzwerk integriert sind. Aus diesem Grund kann das Steuerelement einer Anschalteinheit bzw. das Steuermodul einer Anschaltmoduleinheit den Zugriff auf die Audio-Daten des Sprachspeichers der Anschalteinheit bzw. der Anschaltmoduleinheit einer anderen Anschalteinheit bzw. Anschaltmoduleinheit des Kommunikationssystems freigeben.

Für den Fall, dass mehrere Audio-Dateien zugleich aus einem Sprachspeicher für eine analoge WL-Sprechstelle oder für einen Verstärker zur Ausgabe anstehen, kann das Steuerelement der zugehörigen Anschalteinheit mittels einer Prioritätenregelung, insbesondere mittels einer Prioritätenliste, ermitteln, welche Audio-Dateien an die analoge WL-Sprechstelle bzw. den Verstärker gesendet werden. Somit wird gewährleistet, dass beispielsweise Alarmdurchsagen einen Vorrang vor Informationsdurchsagen erhalten. Die Prioritätenregelung beinhaltet somit, dass die gespeicherten Texte oder Töne nach deren Wichtigkeit ausgegeben werden.

In einer besonders vorteilhaften Ausgestaltung weisen die Anschalteinheiten im Netzwerk die gleiche Software für die Steuerelemente auf, wobei der Hardwaretyp der analogen WL-Sprechstelle bzw. des Verstärkers als Parameter, insbesondere hardwaremäßig, einstellbar sein kann. Ferner können auch die Anschaltmoduleinheiten im Netzwerk die gleiche Software für die Steuermodule aufweisen wie die Anschalteinheiten, wobei der Hardwaretyp der IP-WL-Sprechstelle als Parameter, insbesondere hardwaremäßig, einstellbar sein kann. Durch die Verwendung der gleichen Software wird die Konfiguration vereinfacht, ferner ist das Kommunikationssystem in einfacher Weise erweiterbar.

Wenn Sensoren und/oder Aktoren ins Kommunikationssystem eingebunden werden sollen, so geschieht dies über 1/0-Module, wobei Steuereinheit der 1/0-Modute die Alarmsteuerung hinsichtlich der angeschlossenen Sensoren bzw. Aktoren leistet. Hierbei kann die Steuereinheit des I/O-Moduls die Ausgabensteuerung von Sprachsignalen insbesondere im Alarmfall und die Alarmsignalisierung an einer oder mehreren analogen WL-Ziel-Sprechstellen oder IP-WL-Ziel-Sprechstellen leisten. Die Alarmsteuerung beispielsweise von Sprechstellentasten oder die Ereignis- oder Störmeldeübertragung geschieht somit über virtuelle Verbindung in dem Netzwerk.

Ein besonderer Vorteil der Ausgestaltung der erfindungsgemäßen Anschalteinheit ist, dass sie als Terminaladapter verwendbar ist, d.h. verwendbar zur Anschaltung einer mikroprozessorgesteuerten Vermittlungs-Zentrale, welche u.a. mit analogen Schnittstellen ausgestattet ist, und an welche mindestens eine analoge oder digitale Sprechstelle oder mindestens ein Verstärker mit mindestens einem Lautsprecher anschließbar ist, an ein erfindungsgemäßes Kommunikationssystem. Mit anderen Worten dient die Anschalteinheit zur Ankopplung eines herkömmlichen Kommunikationssystems mit Vermittlungs-Zentrale an ein erfindungsgemäßes Kommunikationssystem mit einem IP-basierten Netzwerk. Hierbei geschieht die Rufübertragung und/oder Signalübertragung derart, dass der Ruf und/oder die Signale von einer analogen oder IP-WL-Sende-Sprechstelle des Kommunikationssystems zu einer analogen oder digitalen Ziel-Sprechstelle oder einem Ziel-Verstärker, welche an die Vermittlungs-Zentrale angeschlossen sind, über die der Sende-Sprechstelle des Kommunikationssystems zugeordneten Anschalteinheit bzw. Anschaltmoduleinheit, über das Netzwerk, über die als Terminaladapter verwendete Anschalteinheit, über die Vermittlungszentrale an die Ziel-Sprechstelle oder den Ziel-Verstärker übertragen werden. Der umgekehrte Weg ist ebenfalls möglich. Hierbei werden der Ruf und/oder die Signale von einer analogen Sende-Sprechstelle, welche an die Vermittlungs-Zentrale angeschlossen ist, zu einer analogen WL-Ziel-Sprechstelle oder IP-WL-Ziel-Sprechstelle oder einem Ziel-Verstärker des Kommunikationssystems über die Vermittlungs-Zentrale, über die als Terminaladapter verwendete Anschalteinheit, über das Netzwerk, über die der Ziel-Sprechstelle oder dem Ziet-Verstärker des Kommunikationssystems zugeordneten Anschalteinheit bzw. Anschaltmoduleinheit, an die Ziel-Sprechstelle oder den Ziel-Verstärker übertragen.

Ein mögliches Ausführungsbeispiel der Erfindung wird anhand der Figuren 1 bis 7 beschrieben. Es zeigen:
- Fig. 1: ein Kommunikationssystem in einem Blockdiagramm;
- Fig. 2: ein Kommunikationssystem mit erhöhter Redundanz in einem Blockdiagramm;
- Fig. 3: eine Anschalteinheit in einem Blockdiagramm;
- Fig. 4: die Anschalteinheit nach Fig. 3 mit angeschlossener Sprechstelle;
- Fig. 5: die Anschalteinheit nach Fig. 3 mit angeschlossenem Verstärker;
- Fig. 6: eine IP-WL-Sprechstelle in einem Blockdiagramm;
- Fig. 7: eine als Terminaladapter verwendete Anschalteinheit in einem Blockdiagramm.

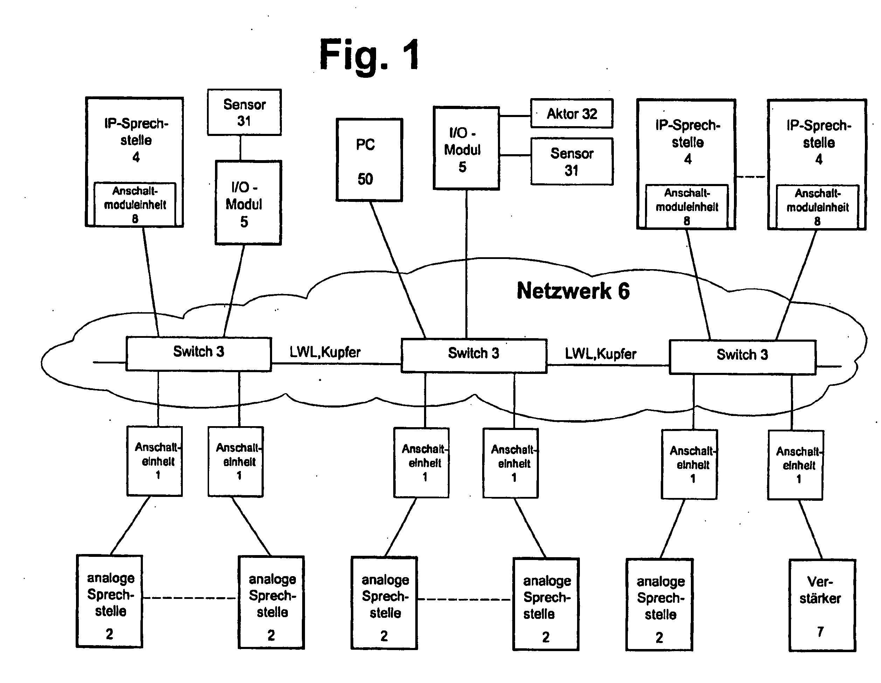

Die Fig. 1 zeigt in einem Blockdiagramm ein Kommunikationssystem mit einem LAN als IP-basierten Netzwerk 6. Den aktiven Teil des Netzwerkes stellen Switche 3 dar, welche untereinander mit Kupferleitungen oder Lichtwellenleitern (LWL) verbunden sind. An die Switche 3 sind über Anshalteinheiten 1 analoge WL-Sprechstellen 2 und Verstärker 7 angeschlossen. Ferner sind an die Switche 3 IP-WL-Sprechstellen 4, welche jeweils eine Anschaltmoduleinheit 8 aufweisen, und IP-fähige I/O-Module 5 angeschlossen. An die I/O-Module 5, welche in Abhängigkeit von Ereignissen Alarmfunktionen aktivieren, Alarme ausführen oder weitergeben, sind Sensoren 31 und Aktoren 32 angeschlossen. An das Netzwerk 6 ist ferner ein Laptop-PC 50 für die Konfiguration der Anschalteinheiten 1 und Anschaltmoduleinheiten 8 und für die Anzeige von Statusmeldungen oder Störmeldungen der Anschalteinheiten 1 und Anschaltmoduleinheiten 8 temporär angeschlossen. Die Strichlinien zeigen an, dass, in Abhängigkeit von der Bauart des Switches, beliebig viele analoge WL-Sprechstellen 2 oder IP-WL-Sprechstellen 4 an einen Switch angeschossen werden können.

Durch die Verwendung von Switchen 3 werden die Endgeräte jeweils auf mehrere Netzsegmente, d.h. auf mehrere lokale Stützpunkte, konzentriert. Selbstverständlich kann jedoch auch ein einzelnes Teilnetzwerk auch ein komplettes Kommunikationssystem darstellen. Das Kommunikationssystem ist für WL-/EL- und Alarmfunktionen ausgelegt.

Alle Anschalteinheiten 1 und Verstärker 7 sind ohne aufwändige Verdrahtung als Einschübe für einen 19 Zoll Baugruppenträger ausgeführt. Sie werden in nicht dargestellter Weise über Backplanes aufgenommen und untereinander über CAT-Kabel verbunden.

Die Funktionsweise des Kommunikationssystems ist dezentral. Dezentral bedeutet nicht nur die örtliche Verteilung der einzelnen analogen WL-Sprechstetten 2 und Verstärker 7 an einem Bussystem, sondern das Vervielfachen der Intelligenz in einem System. Hierzu verfügt jede Anschalteinheit 1 und jede Anschaltmoduleinheit 8 über die gleiche Software. Da unterschiedliche Listeninformationen vom Konfigurationsprogramm in den Anschalteinheiten 1 und den Anschaltmoduleinheiten 8 abgelegt sind, werden diese zu der selektiven Verarbeitung von Meldungen und Befehlen für jede einzelne Steuereinheit herangezogen. Hierdurch kann beispielsweise eine Sprechverbindung schneller aufgebaut werden, da jede Einheit nur das ausführt, wozu diese gerade angesprochen wird. Da eine hohe Bandbreite in einem IP-basierten Bussystem bzw. in einem IP-basierten Netzwerk 6 vorherrscht, worüber die Paketvermittlung abläuft, wird diese bei der alleinigen Nutzung von WL-/EL- und Alarmfunktionen also ohne Nutzung anderer systemfremder Gewerke, wie beispielsweise einer EDV, meist nur mit einem kleinen bis mittleren Datendurchsatz ausgelastet. Somit wird ein Datenstau verhindert.

Übertragen werden diese speziellen Funktionen mittels eines proprietären Protokolls. Unterstützt wird dieser Effekt durch eine UDP-Organisation der Datenübermittlung nur im unteren Bereich des ISO-OSI-Schichtenmodells mit der maximalen Schicht Vier der Transportebene. Damit bleibt die Paketvermittlung für das gesamte System in einer kleinstmöglichen Paketeinheit effektiv für eine annähernde Echtzeitübertragung. Eine weitere Maßnahme zur Echtzeitübertragung ist die deterministische isochrone Übertragung der Datenpakete. Hierdurch werden die Datenpufferspeicher verkleinert. Damit werden die Signalverzögerungszeiten auf ein Minimum reduziert.

Vorzugsweise wird auf ein Mulitcast-Verfahren verzichtet. Beispielsweise müssen bei einem WL-Verbindungsaufbau in einem komplexen Kommunikationssystem alle Belegtmeldungen über das Broadcast-Verfahren auf die einzelnen Endgeräte übertragen werden, welche die verbindungsbeteiligten Endgeräte erreichen können. Auch bei einem Sammelruf werden alle Endgeräte angesprochen und somit die Anrufsignalisierung auf alle erreichbaren Sprechstellen gegeben. Außerdem wird hierbei die digitale NF-Übertragung mittels Broadcast-Vermittlung vorgenommen.

Durch die effiziente Bauweise dieses Systems mit der dezentralen Software ist dieses System besonders zum Austausch vorhandener alter WL/EL-Zentralen sowie für kleine bis mittlere Anlagengrößen (2 bis 250 Teilnehmer) geeignet, aber nicht darauf beschränkt. Die Vorteile des Systems sind die kleinen Verbindungsaufbauzeiten < 200 ms, beispielsweise bei Druck auf eine Sprechstellentaste, und die kleinen Signalverzögerungszeiten < 50 ms bei gleichzeitiger Nutzung von 40 und mehr Sprach-Verkehrswegen sowie die hohe NF-Bandbreite von ca. 10 kHz. Die Signalverzögerungszeiten werden durch Datenpuffer hervorgerufen, welche entsprechend der Systemgröße mehr oder weniger von den Datenpaketen in Anspruch genommen werden müssen. Hinzu kommen die Wandlungszeiten des CODECs für das Digitalisieren und Analogisieren der NF-Signale.

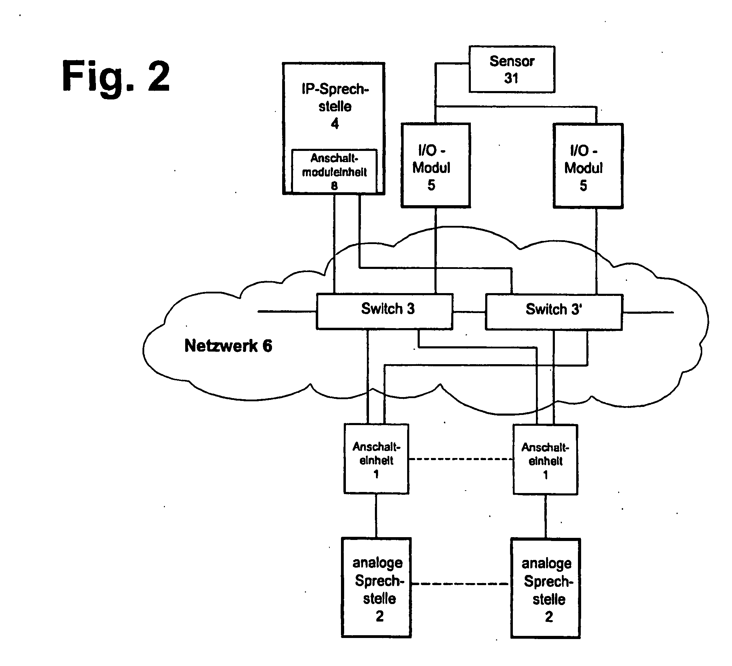

Die Fig. 2 zeigt ein Kommunikationssystem mit erhöhter Redundanz in einem Blockdiagramm mit zwei analogen WL-Sprechstellen 2, welche jeweils mit einer zugeordnete Anschalteinheit 1 verbunden sind. Jede Anschalteinheit 1 weist in dieser Ausführung zwei Netzwerkschnittstellen auf und ist über diese an einen ersten Switch 3 sowie an einen redundanten zweiten Switch 3' angeschlossen. Die beiden Switche 3 und 3' überwachen sich gegenseitig, wobei der eine Switch bei Ausfall des anderen Switches alle Verbindungsfunktionen übernimmt. Auch die Anschaltmoduleinheit 8 der IP-WL-Sprechstelle 4 weist zwei Netzwerk-schnittstellen auf und ist an beide Switche 3 und 3' angeschlossen. Weil die I/O-Module 5 nur über eine Netzwerkschnittstelle verfügen, werden diese gedoppelt, wobei es natürlich auch möglich ist, 1/0-Module 5 mit zwei Netzwerkschnittstellen zu verwenden.

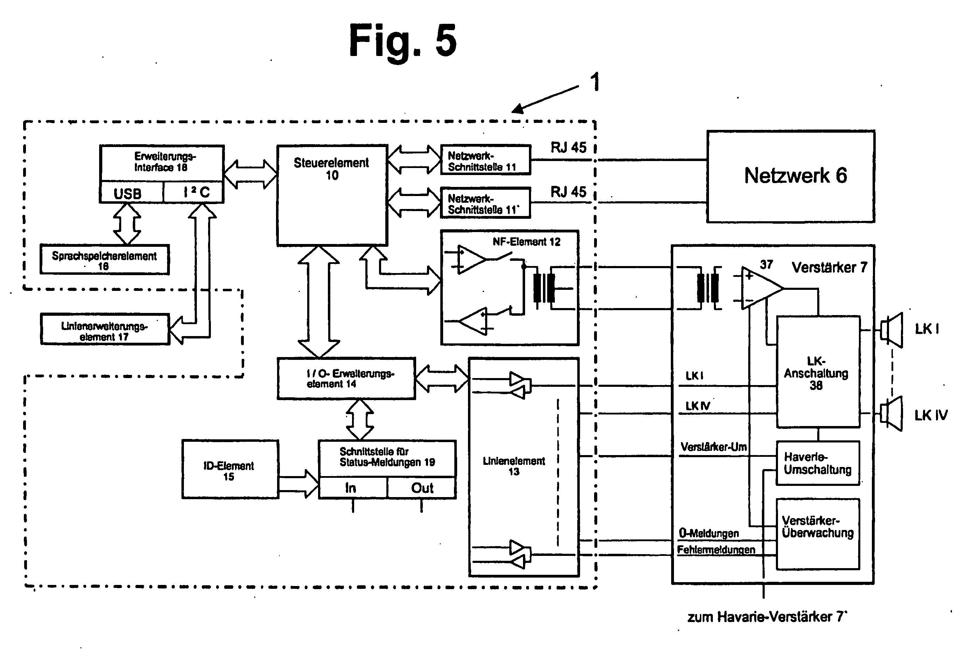

Als Sensor 31 kann beispielsweise ein Druckmesser verwendet werden. Wenn Werte erfasst werden, die auf eine Gefahr schließen lassen, können daraus resultierende Informations- oder Warn-Ansagen automatisch über virtuelle Verbindungen über das IP-basierende Netzwerk 6 aus einem in Fig. 5 dargestellten digitalen Sprachspeicherelement 16 abgerufen werden und auf die Lautsprecherkreise LK I bis LK IV in der Gefahrenzone verteilt werden. Außerdem können die Ereignisse als Alarmfunktionen auf Tastenelementen einer IP-WL-Sprechstelte 4 angezeigt werden.

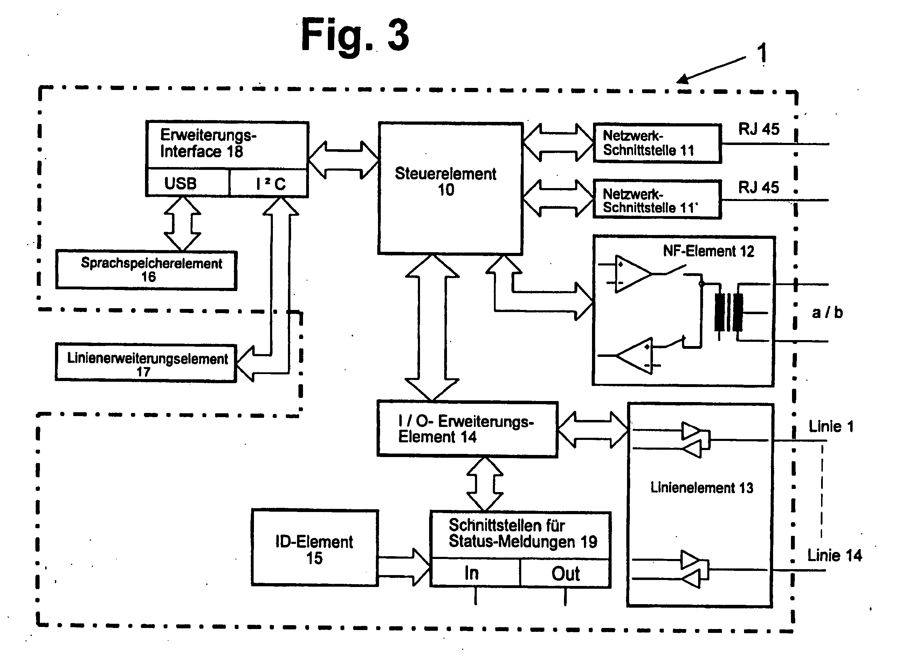

Die Fig. 3 zeigt eine funktionsselbständige Anschalteinheit 1 in einem Blockdiagramm mit den im Folgenden beschriebenen Elementen:

### Steuerelement 10:

Das elektronische, programmierbare Steuerelement 10 leistet die Steuerung der Anschalteinheit 1. Da in diesem Element die Software gespeichert ist, werden alle Steuerfunktionen hier organisiert und verteilt. Die Software ist speziell auf die Ausführung der WL/EL-und Alarmfunktionen ausgelegt. Ein CODEC (Coder und Decoder) leistet die Codierung und Decodierung der Daten für die Netzwerkübertragung. Über eine Liste werden die Funktionen festgelegt, welche speziell für das anzuschließende analoge Gerät bestimmt sind. Das Steuerelement 10 enthält einen eigenen Taktgenerator, der über das proprietäre Protokoll im Zusammenhang mit anderen Anschalteinheiten 1 und IP-WL-Sprechstetlen 4 synchronisiert werden kann.

Der CODEC wandelt linear mit 12 Bit die digitalen Sprachdaten in analoge und umgekehrt um. Hierzu wird er mit 24 kHz getaktet, wodurch eine Sprach-Nutzbandbreite von ca. 10 kHz zur Verfügung gestellt wird.

### Netzwerkschnittstellen 11 und 11':

Die funktionsgleichen Ethernet-Netzwerkschnittstellen 11 und 11' bilden das Interface zum IP-basierten Netzwerk 6, d.h. hierüber wird das proprietäre Protokoll übertragen. Die Netzwerkschnittstellen 11 und 11' sind als RJ 45-Steckverbinder ausgeführt und können für den Normalbetrieb wahlweise an das Netzwerk 6 geschaltet werden, jedoch ist nur eine Netzwerk-Verbindung erforderlich. Eine von beiden Netzwerkschnittstellen 11 und 11' kann auch für den redundanten Netzbetrieb vorgesehen werden.

### NF-Element 12:

Das NF-Element 12 ist auf der internen Seite mit dem CODEC des Steuerelements 10 und über eine NF-Schnittstelle auf der externen Seite mit einer analogen WL-Sprechstelle 2 oder einem Verstärker 7 verbunden. Vom CODEC wird der Sende- und Empfangsweg getrennt auf die Anpass- und Entkopplungsverstärker des NF-Elements 12 gegeben. Da die WL-a/b eine Zweidrahtleitung zum externen Endgerät darstellt, wird zwischen Sende- und Empfangskanal beim Sprechstellenanschluss umgeschaltet.

### Linienelement 13:

Das Linienelement 13 wird sowohl für bidirektionale Linien im Halbduplexverkehr als auch als Eingänge oder Ausgänge im Simplexverkehr verwendet. Im Sonderfall des Vorranges, kann die Linie auch im Duplexverkehr arbeiten, d.h. im Fall einer Belegtsignalisierung (Dauerlicht) am Sprechstellentastenelement kann dieses zur Absetzung eines Rufes noch wirksam betätigt werden.

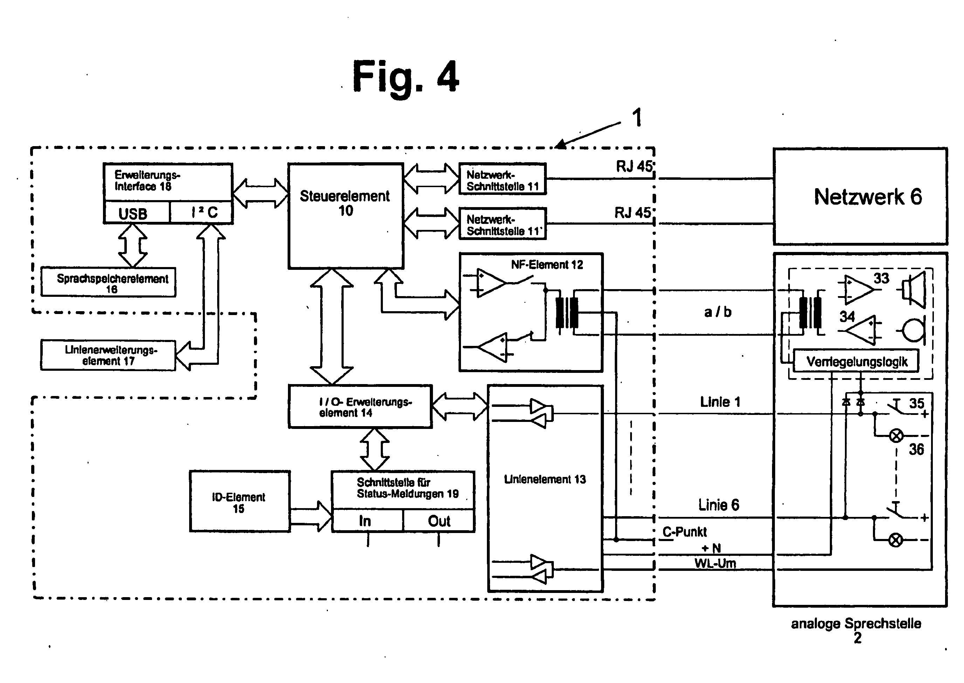

Die Funktionen des Linienelements 13 ergeben sich nach der Art des angeschlossenen Endgeräts, wobei jedoch die Ausgestaltung der Anschalteinheit unabhängig vom angeschlossenen Endgerät ist. In Fig. 4 ist an die Anschalteinheit 1 nach Fig. 3 eine analoge WL-Sprechstelle 2 angeschlossen. In dieser Ausführung stehen bei der Anschaltung der analogen WL-Sprechstelle 2 sechs bidirektionale 48 V-Linien für die Zielauswahl zu anderen Sprechstellen oder Lautsprecherkreisen und dem Signalverkehr für die optische Anzeige zwischen den beteiligten Sprechstellen zur Verfügung. Jede Linie ist an einem Eingang und an einem Ausgang eines I/O-Portbausteines angeschlossen. Diese werden entkoppelt zusammengefasst und potentialgetrennt auf eine Arbeitsnennspannung von 48V = gebracht.

Die analoge WL-Sprechstelle 2 weist sechs Linientasten 35, welche anderen Sprechstellen zugeordnet sind, sowie sechs zugeordnete Tastenleuchtelemente 36 für die Anzeige des Belegt- und Rufstatus der entsprechenden anderen Sprechstelle auf.

Weiter werden folgende einseitige Steuerleitungen über die Linien zur Verfügung gestellt:
- C-Punkt :: Einschalten des Leistungsverstärkers 33 in der analogen WL-Sprechstelle 2
- WL-Um :: Einschalten des Mikrofonverstärkers 34 in der analogen WL-Sprechstelle 2, z.B. für freies Rück-Sprechen
- +N :: Sperren des Mikrofonverstärkers 34 in der analogen WL-Sprechstelle 2 (Sprechstelle 2 auf Nachrang schalten)

In **Fig. 5** ist an die Anschalteinheit 1 nach Fig. 3 ein Verstärker 7 angeschlossen. Der Verstärker 7 weist einen Leistungsverstärker 37 auf, welcher mit einer Lautsprecherkreisanschaltung 38 verbunden ist. An die Lautsprecherkreisanschaltung sind vier Lautsprecherkreise LK I bis LK IV angeschlossen, welche jeweils aus mehreren Lautsprechern bestehen.

Bei der Anschaltung eines Verstärkers 7 (z.B. nach VDE 0828) werden folgende Steuerfunktionen über die Linien als nur Eingänge oder nur Ausgänge ausgeführt:

### 1. Ausgänge

- Anschaltung von vier Lautsprecherkreisen LK I bis LK IV bei gleichzeitiger Einschaltung des Leistungsverstärkers 37
- Umschalten auf Havarieverstärker bei Havarie eines Verstärkers durch Umschaltung der a/b über eine virtuelle Verbindung über das Netzwerk 6
- Umschalten auf Havarieverstärker bei Havarie eines Verstärkers durch Umschalten der am ausgefallenen Verstärker befindlichen Lautsprecherkreise auf den Havarieverstärker

### 2. Eingänge

- NF-Überwachung der a/b
- NF-Überwachung der a/b (100 V) im Lautsprecherkreis
- Erdschluss
- Verstärkereinschaltquittung
- unterbrochener Lautsprecherkreis
- Abschalten des Verstärkers bei Fehlern
- Abschalten des Verstärkers bei Übertemperatur
- Sicherungsausfall

### ID-Element 15:

Da die Anschalteinheit 1 zur Anschaltung unterschiedlicher analoger Endgeräte geeignet ist, wie eine analoge WL-Sprechstelle 2 oder ein Verstärker 7, muss diese mittels des ID-Etements 15 auf den entsprechenden Hardwaretyp eingestellt werden. Dies geschieht mit Hilfe von Jumpern, wobei über 5 Bit codiert 32 Möglichkeiten zur Verfügung stehen.

### Schnittstelle für Status-Meldungen 19:

Die Anschalteinheit 1 weist eine Schnittstelle für Status-Meldungen 19 mit den im Folgenden beschriebenen Ein- und Ausgängen auf:

### 1. Ausgänge

Dies sind Signale von Überwachungsfunktionen, welche auf der Frontplatte der Anschalteinheit 1 mittels nicht dargestellter LEDs angezeigt werden:
- Nachtabsenkung des NF-Pegels
- Audio senden
- Audio empfangen
- Betriebsbereitschaft
- allgemeine Fehlermeldung

### 2. Eingänge

- ID vom ID-Element
- Sicherungsausfall
- 48 V-Überwachung
- Ruhestromüberwachung einer analogen WL-Sprechstelle 2

### Sprachspeicherelement 16:

Das digitale Sprachspeicherelement ist in einem handelsüblichen USB-Stick integriert. Dieser ist in einfacher Weise über die USB-Schnittstelle einsteckbar. Auf ihm sind Audio-Dateien abgelegt, aus welchen Texte und Alarmtöne generiert werden. Da die Anschalteinheit 1 mit einem Verkehrsweg ausgestattet ist, wird die Sprach- oder Tonausgabe durch eine Prioritätenregelung gesteuert.

Folgende Funktionen können über den einen Verkehrsweg wahlweise ausgeführt werden:
- WL/EL-Gespräch an der angeschlossenen analogen WL-Sprechstelle 2
- Abrufen der Ansagen über die eigene Sprechstellentaste
- Abrufen der Ansagen über eine virtuelle Steuerverbindung über das Netzwerk 6, z.B. von anderen Sprechstellen oder als automatische Ansage von Sensoren 31 über ein I/O-Modul 5

Durch die Verwendung von mehreren Anschalteinheiten 1 mit Sprachspeicherelementen 16 können so viele Ansagen gleichzeitig ausgegeben werden, wie Verkehrswege vorhanden sind.

### Linienerweiterungselement 17:

Für größere analoge WL-Sprechstellen 2 mit mehr als sechs Linientasten 35 kann eine Linienerweiterung vorgenommen werden. Dies geschieht durch Anschalten eines Linienerweiterungselements 17, das als Zusatzeinschub ausgeführt ist, und das über einen I²C-Bus des Erweiterungsinterfaces 18 mit dem Steuerelement 10 verbunden ist. Durch den Zusatzeinschub werden 16 weitere Linien zur Verfügung gestellt.

Das Kommunikationssystem weist einen nicht dargestellten Havarieverstärker 7' auf. Damit der Havarieverstärker 7' für beliebige Verstärker zur Verfügung steht, wird dieser an eine eigene Anschalteinheit angeschlossen, welche ausschließlich für den Havarieverstärker zur Verfügung steht. Der Havarieverstärker 7' hat die Aufgabe, die LK-Kreise eines defekten Verstärkers zu übernehmen. Außerdem kann ein Havarieverstärker 7' einer Gruppe von Verstärkern zugewiesen werden, wobei der Ausfall eines Verstärkers vom Havarieverstärker 7' mit den angeschalteten LK-Kreisen übernommen wird. Die Umschaltkriterien sind über das Konfigurations-Programm konfigurierbar.

In den 100 V Lautsprecherkreisen (A/B) wird die Umschaltung durch Relais durchgeführt, welche von den Anschalteinheiten, über die Linien als Ausgänge geschaltet, gesteuert werden. Die digitalisierte NF in der Anschalteinheit wird bei Ausfall eines Verstärkers über die Software dem Havarieverstärker 7' zugeordnet (Verstärkereingangs-Umschaltung).

Umschaltkriterien für die Havarie-Erkennung sind:
- Überwachung des Ein- und Ausganges eines Verstärkers. (Wenn am Verstärkereingang die NF ansteht und Verstärkerausgang die NF ausfällt, liegt ein Fehler vor.)
- Sicherung defekt
- Überhitzung

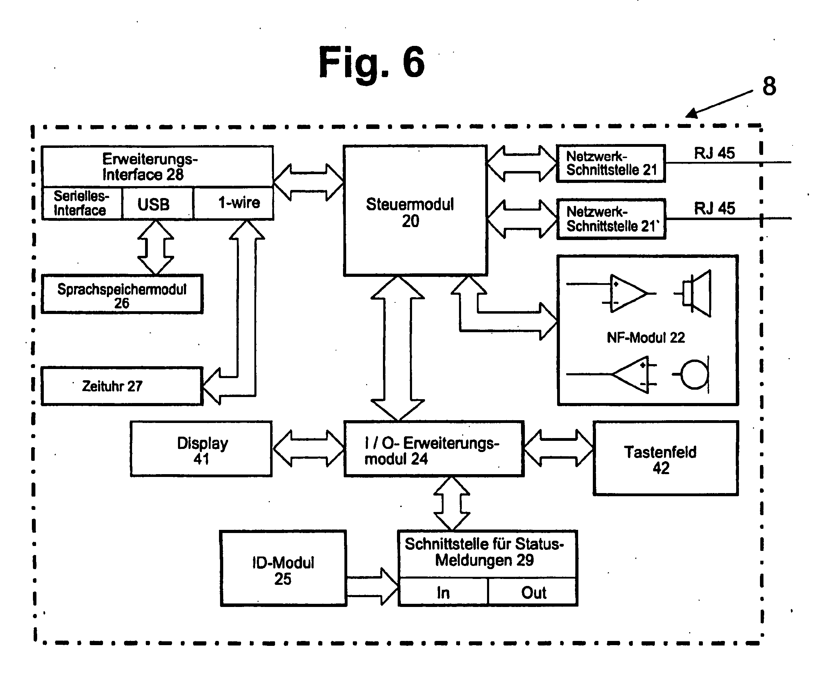

Die Fig. 6 zeigt eine Anschaltmoduleinheit 8 einer IP-WL-Sprechstelle 4 mit Mikrofon und Lautsprecher in einem Blockdiagramm. Es wird die Ähnlichkeit zu der Anschalteinheit 1 nach Fig. 3 deutlich. Im Folgenden werden die einzelnen Module erläutert.

### Steuermodul 20:

Hier liegen keine Unterschiede zum Steuerelement 10 nach Fig. 3 vor.

### Netzwerkschnittstellen 21 und 21':

Die Netzwerkschnittstellen 21 und 21' haben die gleiche Funktionalität wie die Netzwerkschnittstellen 11 und 11'. Zusätzlich kann die zweite Schnittstelle 21' jedoch auch für die Fernspeisung einer IP-WL-Sprechstelle 4 über das Netzwerkkabel (Power over Ethernet) vorgesehen sein.

### NF-Modul 22:

Das NF-Modul 22 ist die Ein- und Ausgabeschnittstelle für die Sprachkommunikation. Es ist mit dem CODEC des Steuermoduls 20 über einen getrennten Ein- und Ausgabekanal verbunden und enthält einen Mikrofon- und Leistungsverstärker.

### ID-Modul 25:

Da die gleiche Software sowohl für die Anschaltmoduleinheit 8 der IP-WL-Sprechstelle 4 als auch für die Anschalteinheit 1 verwendet wird, muss auch hier der Hardwaretyp der IP-WL-Sprechstelle 4 eingestellt werden. Dies geschieht wiederum mit Hilfe von Jumpern, wobei über 5 Bit codiert 32 Möglichkeiten zur Verfügung stehen.

### Schnittstelle für Status- Meldungen 29:

Für die Statusmeldungen stehen sowohl Ein- als auch Ausgänge zur Verfügung. Die IP-WL-Sprechstelle 4 nutzt die folgenden Eingänge für Überwachungsfunktionen:
- Mikrofon defekt
- Spannungsausfall Steckernetzteil
- Spannungsausfall über die Ethernet-Zuleitung

### Tastenfeld 42:

Die Anschaltmoduleinheit 8 beinhaltet ein Tastenfeld 42, in einer Grundausführung mit bis zu 16 Tasten und in einer erweiterten Ausführung mit bis zu 250 Tasten. Das Tastenfeld 42 ist über ein 1/0-Erweiterungsmodul 24 mit dem Steuermodul 20 verbunden. Über das Steuermodul 20 werden die Tastenbefehle entgegengenommen und die den Tasten zugeordneten, nicht dargestellten LEDs in Abhängigkeit der Funktionen ausgeleuchtet.

### Display 41:

Ein zweizeiliges Display steht für die aktuelle Meldungsanzeige zur Verfügung. Beispielsweise werden folgende Meldungen angezeigt:
- wohin wird die Sprechverbindung geschaltet
- woher kommt die Sprechverbindung
- Uhrzeit
- Einstellfunktionen

### Sprachspeichermodul 26:

Hier liegen keine Unterschiede zum Sprachspeicherelement 16 nach Fig. 3 vor.

### Zeituhr 27:

Die Zeituhr 27 als elektronische Einheit ist über eine einfache serielle Schnittstelle (1-wire) über das Erweiterungs-Interface 28 mit dem Steuermodul 20 verbunden. Sie ist für die Nachtabsenkung, für die Uhrzeitanzeige auf dem Display 41 und für einen Zeitstempel im Zusammenhang mit der Störmeldeausgabe vorgesehen. Im gesamten System ist nur eine Uhr als zentrale Einheit vorgesehen. Jede IP-WL-Sprechstelle 4 hat eine Nummer. Die IP-WL-Sprechstelle 4 mit der kleinsten Nummer ist für die Uhrzeit im gesamten System verantwortlich. Fällt diese Uhr aus, so wird auf die nächste Zeituhr in einer anderen IP-WL-Sprechstelle 4 mit der nächsthöheren Nummer umgeschaltet.

Die in Fig. 6 dargestellte Anschaltmoduleinheit 8 mit Mikrofon und Lautsprecher kann auch zur Anschaltung einer PC-Sprechstelle verwendet werden. Die PC-Sprechstelle umfasst einen PC sowie Mittel zur Ein- und Ausgabe von Daten. Als Mittel zur Ein- und Ausgabe von Daten kann ein Touchscreen verwendet werden, so dass das Display 41 und das Tastenfeld 42 der Anschaltmoduleinheit 8 nicht gebraucht werden. Die Anschaltmoduleinheit 8 wird über das vorzugsweise als RS 232 oder RS 422 Schnittstelle ausgebildet serielle Interface des Erweiterungsinterfaces 28 mit dem PC verbunden, wobei der PC ebenfalls die entsprechende serielle Schnittstelle aufweist.

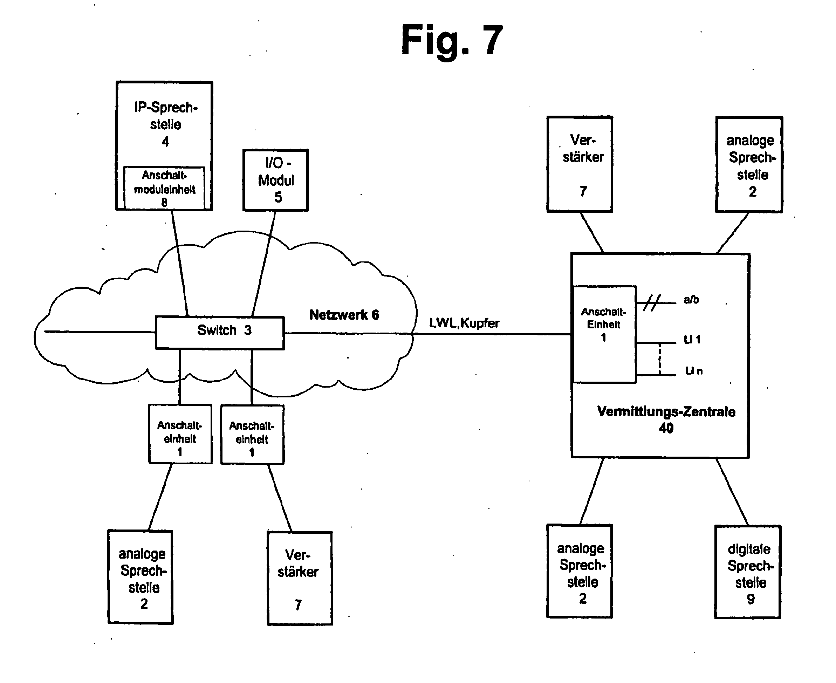

Die **Fig. 7** zeigt die Realisierung einer als Terminaladapter verwendeten Anschalteinheit in einem Blockdiagramm. Für die Verbindung zwischen dem Kommunikationssystem nach Fig. 1 und einer bereits bestehenden mikroprozessorgesteuerten WL/EL-Vermittlungs-Zentrale 40, welche mit analogen Schnittstellen ausgestattet ist, kann die Anschalteinheit 1 in die bestehende Vermittlungs-Zentrale 40 als Terminaladapter eingefügt werden. An die Vermittlungs-Zentrale sind analoge WL-Sprechstellen 2, Verstärker 7 und digitale WL-Sprechstellen 9 angeschlossen. Die Verbindung zu dem Kommunikationssystem nach Fig. 1 erfolgt über die Netzwerkschnittstelle 11. Die Verbindung besteht aus einem Verkehrsweg für die Sprachübermittlung und die automatischen Ton/Text-Übertragungen in beiden Richtungen. Es können so viele Ziele in der Vermittlungs-Zentrale 40 erreicht werden wie Linien in der Anschalteinheit 1 zur Verfügung stehen. Die Ziele können die analogen WL-Sprechstellen 2, die digitalen WL-Sprechstellen 9 und die Verstärker 7 sein. In umgekehrter Richtung gilt das gleiche.

Die Art und Weise der Linienumsetzung wird im Stand der Technik z.B. mittels Linienkonzentratoren beschrieben (DE 43 34 906 C2), wobei in diesem Fall allerdings zwei a/b für die Übertragung notwendig waren, die eine für die Datenübertragung per FSK (Frequency Shift Keying) und die andere für die analoge NF-Übertragung.

## Patentansprüche

1. Anschalteinheit (1) zur Abschaltung einer analogen WL-Sprechstelle (2) eines dezentral organisierten Kommunikationssystems in einem IP-basierten Netzwerk (6) mit
i. einem elektronischen, programmierbaren Steuerelement (10)
- für die Adressierung der Rufe,
- für die Erkennung des Eingangs an die Anschalteinheit (1) adressierter Rufe aus Daten, welche im Broadcast-Verfahren in das Netzwerk (6) gesendet werden,
- für die Erkennung der Nichterreichbarkeit anderer Anschalteinheiten (1) des Kommunikationssystems anhand nicht an die Anschalteinheit (1) adressierter Rufe und die Übertragung der Nichterreichbarkeit an die WL-Sprechstelle (2) über an die Anschalteinheit (1) angeschlossene Linien und
- für die Steuerung der Anschalteinheit (1) und die Codierung und Decodierung von Sprachsignalen für die Netzwerkübertragung,
ii. einer an das Steuerelement (10) angeschlossenen_Netzwerk-Schnittstelle (11) für die Verbindung zu dem Netzwerk (6),
iii. einem an das Steuerelement (10) angeschlossenen NF-Element (12) für die Anpassung von Sende- und Empfangssprachsignalen und die Entkopplung der Sende- und Empfangsrichtung,
iv. einer NF-Schnittstelle für die Verbindung zur Übermittlung der Sprachsignale, insbesondere über eine a/b-Leitung, von und zur Sprechstelle (2), und
v. einem über ein I/O-Erweiterungselement (14) an das Steuerelement (10) angeschlossenen Linienelement (13) für die Umsetzung von Liniensignalen und gegebenenfalls von Steuer- und/oder Überwachungssignalen, mit mehreren Linien-Schnittstellen für den Anschluss von mehreren Linien von und zur Sprechstelle (2).

2. Anschalteinheit (1) nach Anspruch 1, **dadurch gekennzeichnet, dass** sie ein ID-Element (15) aufweist, welches insbesondere mittels Jumper einstellbar ist und welches dem Steuerelement (10) den Hardwaretyp des angeschlossenen Endgeräts vorgibt.

3. Anschalteinheit (1) nach Anspruch 1 oder 2, **dadurch gekennzeichnet, dass** sie zwei funktionsgleiche Netzwerk-Schnittstellen (11, 11') aufweist.

4. Anschalteinheit (1) nach einem der Ansprüche 1 bis 3, **dadurch gekennzeichnet, dass** sie ein digitales Sprachspeicherelement (16), insbesondere einen USB-Stick, für die Speicherung von Audio-Dateien aufweist, welches insbesondere über eine USB-Schnittstelle eines Erweiterungsinterfaces (18) mit dem Steuerelement (10) verbunden ist.

5. Anschalteinheit (1) nach einem der Ansprüche 1 bis 4, **dadurch gekennzeichnet, dass** sie mindestens eine Schnittstelle (19) für die Ein- und/oder Ausgabe von Status-Meldungen aufweist.

6. Anschalteinheit (1) nach Anspruch 5, **dadurch gekennzeichnet, dass** sie mindestens ein Anzeigeelement, insbesondere eine LED, für die Anzeige von Status-Meldungen aufweist.

7. Anschalteinheit (1) nach einem der Ansprüche 1 bis 6, **dadurch gekennzeichnet, dass** sie ein Linienerweiterungselement (17) für die Umsetzung von weiteren Liniensignalen aufweist, welches insbesondere über eine I²C-Schnittstelle eines Erweiterungsinterfaces (18) mit dem Steuerelement (10) verbunden ist.

8. Anschalteinheit (1) nach einem der Ansprüche 1 bis 7, **dadurch gekennzeichnet, dass** das Steuerelement (10) einen Taktgenerator für die Synchronisation mit anderen Anschalteinheiten (1) aufweist.

9. Anschalteinheit (1) nach einem der Ansprüche 1 bis 8, **dadurch gekennzeichnet, dass** sie als Einschub für einen insbesondere 19 Zoll Baugruppenträger ausgeführt ist und auf eine Backplane aufgesteckt ist.

10. Anschalteinheit (1) nach Anspruch 9, **dadurch gekennzeichnet, dass** die Netzwerkschnittstelle bzw. Netzwerkschnittstellen (11, 11') auf der Frontplatte des Einschubs angeordnet sind.

11. Dezentral organisiertes Kommunikationssystem mit einem IP-basierten Netzwerk (6) und einer analogen WL-Sprechstelle (2), welche über eine Anschalteinheit (1) nach einem der Ansprüche 1 bis 10 mit dem Netzwerk (6) verbunden ist, und mindestens einer weiteren Einrichtung ausgewählt aus der Gruppe bestehend aus:
a) analogen WL-Sprechstellen (2), welche jeweils über eine beschriebene Anschalteinheit (1) mit dem Netzwerk (6) verbunden sind,
b) Verstärkern (7) zum Anschluss von mindestens einem Lautsprecher, welche jeweils über eine Anschalteinheit (1) nach einem der Ansprüche 1 bis 10 mit dem Netzwerk (6) verbunden sind, und
c) IP-WL-Sprechstellen (4) mit einem Mikrofon und einem Lautsprecher, umfassend eine Anschaltmoduleinheit (8) zur Anschaltung in das Kommunikationssystem, welche ein elektronisches, programmierbares Steuermodul (20) für die Steuerung der Anschaltmoduleinheit (8), eine Netzwerk-Schnittstelle (21) für die Verbindung zu dem Netzwerk (6), ein an das Steuermodul (20) angeschlossenes NF-Modul (22) für die Verstärkung der Mikrofon- und/oder Lautsprechersignale, und ein Tastenfeld (42) und/oder ein Display (41), welche insbesondere über einem I/O-Erweiterungsmodul (24) mit dem Steuermodul (20) verbunden sind, aufweist, wobei die IP-WL-Sprechstellen (4) jeweils über ihre Anschaltmoduleinheit (8) mit dem Netzwerk (6) verbunden sind.

12. Kommunikationssystem nach Anspruch 11, **dadurch gekennzeichnet, dass** es mindestens einen Switch (3) aufweist, über welchen zumindest zwei Anschalteinheiten (1) mit dem Netzwerk (6) verbunden sind.

13. Kommunikationssystem nach Anspruch 11 oder 12, **dadurch gekennzeichnet, dass** mindestens eine Anschalteinheit (1) oder Anschaltmoduleinheit (8) über zwei funktionsgleiche Switche (3, 3') mit dem Netzwerk (6) verbunden ist.

14. Kommunikationssystem nach einem der Ansprüche 11 bis 13, **dadurch gekennzeichnet, dass** es mindestens einen Sensor (31) und/oder einen Aktor (32) aufweist, welche mit einem I/O-Modul (5) verbunden sind, welches eine Steuereinheit aufweist und insbesondere über einen Switch (3) an das Netzwerk (6) angeschlossen ist.

15. Kommunikationssystem nach einem der Ansprüche 11 bis 14, **dadurch gekennzeichnet, dass** an den Verstärker (7) ein oder mehrere Lautsprecherkreise (LK I bis LK IV) mit jeweils mindestens einem Lautsprecher über eine Lautsprecherkreisanschaltung (38) angeschlossen sind.

16. Kommunikationssystem nach einem der Ansprüche 11 bis 15, **dadurch gekennzeichnet, dass** mindestens ein Lautsprecher an einen Verstärker (7) und einen Havarieverstärker (7') angeschlossen ist, auf welchen im Havariefall des ersten Verstärkers (7) umgeschaltet wird.

17. Kommunikationssystem nach einem der Ansprüche 11 bis 16, **dadurch gekennzeichnet, dass** bei der Anschaltung eines Verstärkers (7) über eine Anschalteinheit (1) an die Linienschnittstellen Signalleitungen zur Übertragung von Steuer- und Überwachungssignalen von und zum Verstärker (7) angeschlossen sind.

18. Kommunikationssystem nach einem der Ansprüche 11 bis 17, **dadurch gekennzeichnet, dass** der Verstärker (7) als Einschub für einen insbesondere 19 Zoll Baugruppenträger ausgeführt ist und auf eine Backplane aufgesteckt ist.

19. Kommunikationssystem nach einem der Ansprüche 11 bis 18, **dadurch gekennzeichnet, dass** an das Netzwerk (6) mindestens ein PC (50) für die Konfiguration der Anschalteinheiten und Anschaltmoduleinheiten, insbesondere der Steuerelemente (10) und Steuermodule (20), und/oder für die Anzeige von Statusmeldungen oder Störmeldungen der Anschalteinheiten (1) und Anschaltmoduleinheiten (8) angeschlossen ist.

20. Verfahren zur Rufübertragung in einem Kommunikationssystem nach einem der Ansprüche 11 bis 19 von einer analogen WL-Sende-Sprechstelle (2) zu einer analogen WL-Ziel-Sprechstelle (2) oder zu einer IP-WL-Ziel-Sprechstelle (4) oder zu einem Ziel-Verstärker (7), an welchen mindestens ein Lautsprecher angeschlossen ist, **dadurch gekennzeichnet, dass** der Ruf der Sende-Sprechstelle (2, 4) über eine der Sende-Sprechstelle zugeordnete Sende-Anschalteinheit (1) nach einem der Ansprüche 1 bis 10, über ein Netzwerk (6), über eine der Ziel-Sprechstelle (2, 4) oder dem Ziel-Verstärker (7) zugeordnete Ziel-Anschalteinheit (1) nach einem der Ansprüche 1 bis 10 oder Ziel-Anschaltmoduleinheit (8) an die Ziel-Sprechstelle (2, 4) bzw. den Zietverstärker (7) übermittelt wird.

21. Verfahren nach Anspruch 20, **dadurch gekennzeichnet, dass** die Daten in dem Netzwerk (6) zumindest teilweise im Broadcast-Verfahren übertragen werden.

22. Verfahren nach Anspruch 21, **dadurch gekennzeichnet, dass** die Daten in dem Netzwerk (6) nur im Broadcast-Verfahren und im Unicast-Verfahren übertragen werden.

23. Verfahren nach Anspruch 21 oder 22, **dadurch gekennzeichnet, dass** die Ziel-Anschalteinheit (1) oder die Ziel-AnschaltModuleinheit (8) aus den von der Sende-Anschalteinheit (1) in das Netzwerk (6) gesendeten Daten erkennt, dass ein an sie adressierter Ruf eingegangen ist.

24. Verfahren nach einem der Ansprüche 20 bis 23, **dadurch gekennzeichnet, dass** die Sende-Anschalteinheiten (1), die einen nicht an sie adressierten Ruf empfangen, aus den von einer anderen Sende-Anschalteinheit (1) in das Netzwerk (6) gesendeten Daten erkennen, dass sowohl diese andere Sende-Anschalteinheit (1) als auch die Ziel-Anschalteinheit (1) bzw. Ziel-Anschaltmoduleinheit (8) für die Dauer des Verbindungszustands nicht erreichbar sind.

25. Verfahren nach einem der Ansprüche 20 bis 24, **dadurch gekennzeichnet, dass** die Daten in dem Netzwerk (6) mittels UDP übertragen werden.

26. Verfahren nach einem der Ansprüche 20 bis 25, **dadurch gekennzeichnet, dass** bei der Datenübermittlung nur die unteren vier Schichten des ISO-OSI-Modells verwendet werden.

27. Verfahren nach einem der Ansprüche 20 bis 26, **dadurch gekennzeichnet, dass** die Daten in dem Netzwerk (6) isochron übertragen werden.

28. Verfahren nach einem der Ansprüche 20 bis 27, **dadurch gekennzeichnet, dass** die Daten in dem Netzwerk (6) deterministisch übertragen werden.

29. Verfahren nach einem der Ansprüche 20 bis 28, **dadurch gekennzeichnet, dass** für den Fall, dass mehrere Zeituhren (27) im Kommunikationssystem enthalten sind, jeder Zeituhr (27) eine Priorität zugeordnet wird, und dass die Zeituhr (27) mit der höchsten Priorität die anderen Zeituhren (27) synchronisiert.

30. Verfahren nach einem der Ansprüche 20 bis 29, **dadurch gekennzeichnet, dass** das Steuerelement (10) einer Anschalteinheit (1) bzw. das Steuermodul (20) einer Anschaltmoduleinheit (8) den Zugriff auf die Audio-Daten des Sprachspeicherelements (16) der Anschalteinheit (1) bzw. des Sprachspeichermoduls (26) der Anschaltmoduleinheit (8) einer anderen Anschalteinheit (1) und/oder Anschaltmoduleinheit (8) des Kommunikationssystems freigibt oder sperrt.

31. Verfahren nach einem der Ansprüche 20 bis 30, **dadurch gekennzeichnet, dass** für den Fall, dass mehrere Audio-Dateien zeitgleich aus einem Sprachspeicher (16, 26) für eine analoge WL-Sprechstelle (2) oder für einen Verstärker (7) zur Ausgabe anstehen, das Steuerelement (10) der zugehörigen Anschalteinheit (1) mittels einer Prioritätenregelung, insbesondere mittels einer Prioritätenliste, ermittelt, welche Audio-Dateien an die analoge WL-Sprechstelle (2) bzw. den Verstärker (7) gesendet werden.

32. Verfahren nach einem der Ansprüche 20 bis 31, **dadurch gekennzeichnet, dass** die Anschalteinheiten (1) im Netzwerk (6) die gleiche Software für die Steuerelemente (10) aufweisen, wobei der Hardwaretyp der analogen WL-Sprechstelle (2) bzw. des Verstärkers (7) als Parameter, insbesondere hardwaremäßig, einstellbar ist.

33. Verfahren nach Anspruch 32, **dadurch gekennzeichnet, dass** die Anschaltmoduleinheiten (8) im Netzwerk (6) die gleiche Software für die Steuermodule (20) aufweisen wie die Anschalteinheiten (1), wobei der Hardwaretyp der IP-WL-Sprechstelle (4) als Parameter, insbesondere hardwaremäßig, einstellbar ist.

34. Verfahren nach einem der Ansprüche 20 bis 33, **dadurch gekennzeichnet, dass** die Steuereinheit eines I/O-Moduls (5) die Alarmsteuerung hinsichtlich des angeschlossenen Sensors (31) bzw. Aktors (32) für das gesamte System leistet.

35. Verfahren nach Anspruch 34, **dadurch gekennzeichnet, dass** die Steuereinheit des I/O-Moduls (5) die Ausgabensteuerung von Sprachsignalen aus einem Sprachspeicher (16, 26) insbesondere im Alarmfall und die Alarmsignalisierung an einer oder mehreren analogen Ziel-Sprechstellen (2) oder IP-WL-Sprechstellen (4) leistet.

## Claims

1. Connection unit (1) for connecting an analogue two-way intercom station (2) of a decentralised communications system in an IP-based network (6), with i. an electronic, programmable control element (10)
- for the addressing of the calls,
- for the recognition of the arrival at the connection unit (1) of addressed calls from data that are transmitted into the network (6) using the broadcast method,
- for the recognition of the unavailability of other connection units (1) of the communications system on the basis of calls not addressed to the connection unit (1) and for the transmission of the unavailability to the two-way intercom station (2) via lines linked to the connection unit (1) and
- for the control of the connection unit (1) and for the coding and decoding of voice signals for the network transmission,
ii. a network interface (11), linked to the control element (10), for the connection to the network (6),
iii. a low frequency element (12), linked to the control element (10), for the adaptation of transmitted and received voice signals and for the decoupling of the transmit and receive directions,
iv. a low frequency interface for the connection for communicating the voice signals, in particular via an a/b line, from and to the intercom station (2), and
v. a line element (13), linked to the control element (10) via an I/O expansion element (14), for the conversion of line signals and, where appropriate, of control signals and/or monitoring signals, with several line interfaces for the linking of several lines from and to the intercom station (2).

2. Connection unit (1) according to Claim 1, **characterised in that** it has an ID element (15) which is adjustable, in particular by means of jumpers, and which specifies to the control element (10) the hardware-type of the linked terminal.

3. Connection unit (1) according to Claim 1 or 2, **characterised in that** it has two functionally identical network interfaces (11, 11').

4. Connection unit (1) according to one of Claims 1 to 3, **characterised in that** it has a digital voice-memory element (16), in particular a USB flash drive, for the storage of audio files, which, in particular, is connected to the control element (10) via an USB interface of an expansion interface (18).

5. Connection unit (1) according to one of Claims 1 to 4, **characterised in that** it has at least one interface (19) for the input and/or output of status messages.

6. Connection unit (1) according to Claim 5, **characterised in that** it has at least one display element, in particular a LED, for the display of status messages.

7. Connection unit (1) according to one of Claims 1 to 6, **characterised in that** it has a line-extension element (17) for the conversion of further line signals, which is connected to the control element (10), in particular via an I²C interface of an expansion interface (18).

8. Connection unit (1) according to one of Claims 1 to 7, **characterised in that** the control element (10) has a clock generator for the synchronisation with other connection units (1).

9. Connection unit (1) according to one of Claims 1 to 8, **characterised in that** it is constructed as a slide-in module for a subrack, in particular a 19 inch subrack, and is plugged onto a backplane.

10. Connection unit (1) according to Claim 9, **characterised in that** the network interface or network interfaces (11, 11') are arranged on the front panel of the slide-in module.

11. Decentralised communications system with an IP-based network (6) and with an analogue two-way intercom station (2) which is connected to the network (6) via an connection unit (1) according to one of Claims 1 to 10, and with at least one further device selected from the group consisting of:
a) analogue two-way intercom stations (2) which are each connected to the network (6) via an connection unit (1) that has been described,
b) amplifiers (7) for linking at least one loudspeaker, which are each connected to the network (6) via an connection unit (1) according to one of Claims 1 to 10, and
c) IP two-way intercom stations (4) with a microphone and a loudspeaker, comprising an connection-module unit (8) for connection to the communications system, which has an electronic, programmable control module (20) for the control of the connection-module unit (8), a network interface (21) for the connection to the network (6), a low-frequency module (22), linked to the control module (20), for the amplification of the microphone signals and/or loudspeaker signals, and a keypad (42) and/or a display (41) which are connected to the control module (20), in particular via an I/O expansion module (24), the IP two-way intercom stations (4) each being connected to the network (6) via their connection-module unit (8).

12. Communications system according to Claim 11, **characterised in that** it has at least one switch (3), via which at least two connection units (1) are connected to the network (6).

13. Communications system according to Claim 11 or 12, **characterised in that** at least one connection unit (1) or connection-module unit (8) is connected to the network (6) via two functionally identical switches (3, 3').

14. Communications system according to one of Claims 11 to 13, **characterised in that** it has at least one sensor (31) and/or one actuator (32) which are connected to an I/O module (5) which has a control unit and is linked to the network (6), in particular via a switch (3).

15. Communications system according to one of Claims 11 to 14, **characterised in that** one or more loudspeaker circuits (LK I to LK IV), each with at least one loudspeaker, are linked to the amplifier (7) via a loudspeaker-circuit access (38).

16. Communications system according to one of Claims 11 to 15, **characterised in that** at least one loudspeaker is linked to an amplifier (7) and to a back-up amplifier (7'), to which a change-over is made in the case of failure of the first amplifier (7).

17. Communications system according to one of Claims 11 to 16, **characterised in that** signal lines for transmitting control signals and monitoring signals from and to the amplifier (7) are linked to the line interfaces in the case of the access of an amplifier (7) via a connection unit (1).

18. Communications system according to one of Claims 11 to 17, **characterised in that** the amplifier (7) is constructed as a slide-in module for a subrack, in particular a 19 inch subrack, and is plugged onto a backplane.

19. Communications system according to one of Claims 11 to 18, **characterised in that** at least one PC (50) for the configuration of the connection units and connection-module units, in particular of the control elements (10) and control modules (20), and/or for the display of status messages or error messages of the connection units (1) and connection-module units (8) is linked to the network (6).

20. Process for call transmission in a communications system according to one of Claims 11 to 19 from an analogue two-way transmitting intercom station (2) to an analogue two-way destination intercom station (2) or to an IP two-way destination intercom station (4) or to a destination amplifier (7) to which at least one loudspeaker is linked, **characterised in that** the call of the transmitting intercom station (2, 4) is communicated to the destination intercom station (2, 4) or to the destination amplifier (7) via a transmitting connection unit (1), assigned to the transmitting intercom station, according to one of Claims 1 to 10, via a network (6), via a destination connection unit (1) according to one of Claims 1 to 10 or destination connection-module unit (8) assigned to the destination intercom station (2, 4) or to the destination amplifier (7).

21. Process according to Claim 20, **characterised in that** the data in the network (6) are transmitted at least partly using the broadcast method.

22. Process according to Claim 21, **characterised in that** the data in the network (6) are transmitted only using the broadcast method and using the unicast method.

23. Process according to Claim 21 or 22, **characterised in that** the destination connection unit (1) or the destination connection-module unit (8) recognises from the data transmitted from the transmitting connection unit (1) into the network (6) that a call addressed to it has been received.

24. Process according to one of Claims 20 to 23, **characterised in that** the transmitting connection units (1) that receive a call not addressed to them recognise from the data transmitted from another transmitting connection unit (1) into the network (6) that both this other transmitting connection unit (1) and the destination connection unit (1) or destination connection-module unit (8) are unavailable for the duration of the connection state.

25. Process according to one of Claims 20 to 24, **characterised in that** the data in the network (6) are transmitted by means of UDP.

26. Process according to one of Claims 20 to 25, **characterised in that** in the course of the communication of data only the lower four layers of the ISO OSI model are used.

27. Process according to one of Claims 20 to 26, **characterised in that** the data in the network (6) are transmitted isochronously.

28. Process according to one of Claims 20 to 27, **characterised in that** the data in the network (6) are transmitted deterministically.

29. Process according to one of Claims 20 to 28, **characterised in that** in the case where several timers (27) are included in the communications system a priority is assigned to each timer (27), and **in that** the timer (27) with the highest priority synchronises the other timers (27).

30. Process according to one of Claims 20 to 29, **characterised in that** the control element (10) of an connection unit (1) or the control module (20) of an connection-module unit (8) enables or disables the access to the audio data of the voice-memory element (16) of the connection unit (1) or of the voice-memory module (26) of the connection-module unit (8) of another connection unit (1) and/or connection-module unit (8) of the communications system.

31. Process according to one of Claims 20 to 30, **characterised in that** in the case where several audio files are pending for output simultaneously from a voice memory (16, 26) for an analogue two-way intercom station (2) or for an amplifier (7) the control element (10) of the associated connection unit (1) ascertains by means of a priority control, in particular by means of a list of priorities, which audio files are transmitted to the analogue two-way intercom station (2) or to the amplifier (7).

32. Process according to one of Claims 20 to 31, **characterised in that** the connection units (1) in the network (6) have the same software for the control elements (10), the hardware-type of the analogue two-way intercom station (2) or of the amplifier (7) being adjustable as a parameter, in particular in terms of hardware.

33. Process according to Claim 32, **characterised in that** the connection-module units (8) in the network (6) have the same software for the control modules (20) as the connection units (1), the hardware-type of the IP two-way intercom station (4) being adjustable as a parameter, in particular in terms of hardware.

34. Process according to one of Claims 20 to 33, **characterised in that** the control unit of an I/O module (5) performs the alarm control with regard to the linked sensor (31) or actuator (32) for the entire system.

35. Process according to Claim 34, **characterised in that** the control unit of the I/O module (5) performs the output control of voice signals from a voice memory (16, 26), in particular in the event of an alarm, and performs the alarm signalling at one or more analogue destination intercom stations (2) or IP two-way intercom stations (4).

## Revendications

1. Unité de connexion (1) servant à connecter un poste téléphonique, analogique et bidirectionnel (2) d'un système de communication à organisation décentralisée dans un réseau IP (6) comportant i. un élément de commande (10) électronique, programmable
- pour adresser les appels
- pour détecter l'entrée des appels adressés à l'unité de connexion (1) sur la base de données, qui sont envoyées dans le réseau (6) dans un procédé de broadcast
- pour détecter la non-accessibilité d'autres unités de connexion (1) du système de communication à l'aide d'appels non adressés à l'unité de connexion (1) et pour la transmission de la non-accessibilité au poste téléphonique bidirectionnel (2) par l'intermédiaire de lignes connectées à l'unité de connexion (1) et
- pour commander l'unité de connexion (1) et le codage et le décodage de signaux vocaux pour la transmission par réseau,
ii. une interface de réseau (11) connectée à l'élément de commande (10) pour le raccordement au réseau (6),
iii. un élément basse fréquence (12) connecté à l'élément de commande (10) servant à adapter des signaux vocaux émis et reçus et servant à découpler la direction d'émission et la direction de réception,
iv. une interface basse fréquence pour le raccordement servant à transmettre des signaux vocaux, en particulier par l'intermédiaire d'une ligne a/b, depuis et en direction d'un poste téléphonique (2), et
v. un élément de lignes (13) connecté à l'élément de commande (10) par l'intermédiaire d'un élément d'extension d'entrée/sortie (14) pour la conversion de signaux de lignes et éventuellement de signaux de commande et/ou de surveillance, comportant plusieurs interfaces de lignes pour la connexion de plusieurs lignes depuis et en direction du poste téléphonique (2).

2. Unité de connexion (1) selon la revendication 1, **caractérisée en ce qu'**elle présente un élément ID (15) qui peut être ajusté en particulier au moyen d'un cavalier et qui spécifie à l'élément de commande (10) le type de matériel du terminal connecté.

3. Unité de connexion (1) selon la revendication 1 ou 2, **caractérisée en ce qu'**elle présente deux interfaces de réseau (11, 11') présentant la même fonction.

4. Unité de connexion (1) selon l'une quelconque des revendications 1 à 3, **caractérisée en ce qu'**elle présente un élément de mémoire vocale (16) numérique, en particulier une clé USB, pour le stockage de fichiers audio, lequel est raccordé à l'élément de commande (10) en particulier par l'intermédiaire d'une interface USB d'une interface d'extension (18).

5. Unité de connexion (1) selon l'une quelconque des revendications 1 à 4, **caractérisée en ce qu'**elle présente au moins une interface (19) pour l'entrée et/ou la sortie de notifications de statut.

6. Unité de connexion (1) selon la revendication 5, **caractérisée en ce qu'**elle présente au moins un élément d'affichage, en particulier une DEL, pour l'affichage de notifications de statut.

7. Unité de connexion (1) selon l'une quelconque des revendications 1 à 6, **caractérisée en ce qu'**elle présente un élément d'extension de lignes (17) pour la conversion d'autres signaux de lignes, lequel est raccordé à l'élément de commande (10) en particulier par l'intermédiaire d'une interface I²C d'une interface d'extension (18).

8. Unité de connexion (1) selon l'une quelconque des revendications 1 à 7, **caractérisée en ce que** l'élément de commande (10) présente un générateur de cadence pour la synchronisation avec d'autres unités de commutation (1).

9. Unité de connexion (1) selon l'une quelconque des revendications 1 à 8, **caractérisée en ce qu'**elle est réalisée sous la forme d'une insertion pour un support de modules de 19 pouces en particulier et qu'elle est enfichée dans un fond de panier.

10. Unité de connexion (1) selon la revendication 9, **caractérisée en ce que** l'interface de réseau ou les interfaces de réseau (11, 11') sont disposées sur le panneau avant de la insertion.

11. Système de communication à organisation décentralisée comportant un réseau IP (6) et un poste téléphonique, analogique et bidirectionnel (2), qui est raccordé au réseau (6) par l'intermédiaire d'une unité de connexion (1) selon l'une quelconque des revendications 1 à 10, et comportant au moins un autre dispositif sélectionné parmi le groupe constitué des dispositifs suivants :
a) des postes téléphoniques, analogiques et bidirectionnels (2), qui sont raccordés au réseau (6) respectivement par l'intermédiaire d'une unité de connexion (1) décrite,
b) es amplificateurs (7) servant à connecter au moins un haut-parleur, lesquels sont raccordés au réseau (6) respectivement par l'intermédiaire d'une unité de connexion (1) selon l'une quelconque des revendications 1 à 10, et
c) des postes téléphoniques analogiques et bidirectionnels IP (4) équipés d'un microphone et d'un haut-parleur, comportant une unité de module de connexion (8) servant à la connexion an système de communication, laquelle unité de module de connexion présente un module de commande (20) électronique programmable pour la commande de l'unité de module de connexion (8), une interface de réseau (21) pour le raccordement au réseau (6), un module besse fréquence (22) connecté au module de commande (20) pour l'amplification des signaux des microphones et/ou des haut-parleurs, et un clavier (42) et/ou un écran (41), lesquels sont raccordés au module de commande (20) en particulier par l'intermédiaire d'un module d'extension d'entrée/sortie (24), dans lequel les postes téléphoniques analogiques et bidirectionnels IP (4) sont raccordés au réseau (6) respectivement par l'intermédiaire de leur unité module de connexion (8).

12. Système de communication selon la revendication 11, **caractérisé en ce qu'**il présente au moins un commutateur (3), lequel permet de raccorder au réseau (6) au moins deux unités de connexion (1).

13. Système de communication selon la revendication 11 ou 12, **caractérisé en ce qu'**au moins une unité de connexion (1) ou l'unité module de connexion (8) est raccordée au réseau (6) par l'intermédiaire de deux commutateurs (3, 3') présentant la même fonction.

14. Système de communication selon l'une quelconque des revendications 11 à 13, **caractérisé en ce qu'**il présente au moins un capteur (31) et/ou un acteur (32), lesquels sont raccordés à un module d'entrée/sortie (5), qui présente une unité de commande et qui est connecté au réseau (6) en particulier par l'intermédiaire d'un commutateur (3).

15. Système de communication selon l'une quelconque des revendications 11 à 14, **caractérisé en ce qu'**un ou plusieurs circuits à haut-parleurs (LK I à LK IV) comportant respectivement au moins un haut-parleur sont connectés à l'amplificateur (7) par l'intermédiaire d'un système de connexion de circuit à haut-parleurs (38).

16. Système de communication selon l'une quelconque des revendications 11 à 15, **caractérisé en ce qu'**au moins un haut-parleur est connecté à un amplificateur (7) et à un amplificateur de backup (7'), sur lequel on commute en cas d'avarie du premier amplificateur (7).

17. Système de communication selon l'une quelconque des revendications 11 à 16, **caractérisé en ce que** des lignes de signal sont connectées aux interfaces de lignes par l'intermédiaire d'une unité de commutation (1) pour la transmission de signaux de commande et de surveillance depuis et en direction de l'amplificateur (7) en cas de commutation d'un amplificateur (7).

18. Système de communication selon l'une quelconque des revendications 11 à 17, **caractérisé en ce que** l'amplificateur (7) est réalisé sous la forme d'une insertion pour un support de modules en particulier de 19 pouces et est enfiché dans un fond de panier.

19. Système de communication selon l'une quelconque des revendications 11 à 18, **caractérisé en ce qu'**au moins un PC (50) est connecté au réseau (6) pour la configuration des unités de connexion et des unités modules de connexion, en particulier des éléments de commande (10) et des modules de commande (20), et/ou pour l'affichage des notifications de statut ou des messages d'erreur des unités de connexion (1) et des unités modules de connexion (8).

20. Procédé de transfert d'appel dans un système de communication selon l'une quelconque des revendications 11 à 19 depuis un poste téléphonique analogique et bidirectionnel (2) vers un poste téléphonique destinataire analogique et bidirectionnel (2) ou vers un poste téléphonique destinataire bidirectionnel IP (4) ou vers un amplificateur destinataire (7), auquel est connecté au moins un haut-parleur, **caractérisé en ce que** l'appel du poste téléphonique émetteur (2, 4) est transféré au poste téléphonique destinataire (2, 4) ou à l'amplificateur destinataire (7) par l'intermédiaire d'une unité de connexion émettrice (1) selon l'une quelconque des revendications 1 à 10, associée au poste téléphonique émetteur par l'intermédiaire d'un réseau (6), par l'intermédiaire d'une unité de connexion destinataire (1) selon l'une quelconque des revendications 1 à 10, ou par l'intermédiaire d'une unité module de commutation destinataire (8) associée au poste téléphonique destinataire (2, 4) ou à l'amplificateur destinataire (7).

21. Procédé selon la revendication 20, **caractérisé en ce que** les données sont transférées dans le réseau (6) au moins en partie dans le procédé de broadcast.

22. Procédé selon la revendication 21, **caractérisé en ce que** les données sont transférées dans le réseau (6) uniquement dans le procédé de broadcast ou dans le procédé de unicast.

23. Procédé selon la revendication 21 ou 22, **caractérisé en ce que** l'unité de connexion destinataire (1) ou l'unité module de connexion destinataire (8) détecte à partir des données envoyées par l'unité de connexion émettrice (1) dans le réseau (6) qu'un appel qui lui est adressé est entré.

24. Procédé selon l'une quelconque des revendications 20 à 23, **caractérisé en ce que** les unités de connexion émettrices (1), qui reçoivent un appel qui ne leur est pas adressé, détectent à partir des données envoyées dans le réseau (6) depuis une autre unité de connexion émettrice (1) qu'aussi bien cette autre unité de connexion émettrice (1) que l'unité de connexion destinataire (1) ou l'unité module de connexion destinataire (8) ne sont pas accessibles pour la durée de l'état de connexion.

25. Procédé selon l'une quelconque des revendications 20 à 24, **caractérisé en ce que** les données sont transférées dans le réseau (6) au moyen de l'UDP.

26. Procédé selon l'une quelconque des revendications 20 à 25, **caractérisé en ce que** les 4 couches inférieures seulement du modèle ISO-OSI sont utilisées lors du transfert de données.

27. Procédé selon l'une quelconque des revendications 20 à 26, **caractérisé en ce que** les données sont transférées dans le réseau (6) de manière isochrone.

28. Procédé selon l'une quelconque des revendications 20 à 27, **caractérisé en ce que** les données sont transférées dans le réseau (6) de manière déterministe.

29. Procédé selon l'une quelconque des revendications 20 à 28, **caractérisé en ce que** si le système de communication comprend plusieurs horloges (27), une priorité est associée à chaque horloge (27), et **en ce que** l'horloge (27) synchronise les autres horloges (27) avec la priorité la plus élevée.

30. Procédé selon l'une quelconque des revendications 20 à 29, **caractérisé en ce que** l'élément de commande (10) d'une unité de connexion (1) ou le module de commande (20) d'une unité module de connexion (8) libère ou bloque l'accès à des données audio de l'élément de mémoire vocale (16) de l'unité de connexion (1) ou du module de mémoire vocale (26) de l'unité module de connexion (8) d'une autre unité de connexion (1) et/ou d'une autre unité module de connexion (8) du système de communication.

31. Procédé selon l'une quelconque des revendications 20 à 30, **caractérisé en ce que** si plusieurs fichiers audio en provenance simultanément d'une mémoire vocale (16, 26) pour un poste téléphonique analogique et bidirectionnel (2) ou pour un amplificateur (7) sont en attente de traitement pour la sortie, l'élément de commande (10) de l'unité de connexion (1) associée détermine au moyen d'une règle de priorités, en particulier au moyen d'une liste de priorités, les fichiers audio qui sont envoyés au poste téléphonique analogique et bidirectionnel (2) ou à l'amplificateur (7).

32. Procédé selon l'une quelconque des revendications 20 à 31, **caractérisé en ce que** les unités de connexion (1) présentent dans le réseau (6) le même logiciel pour les éléments de commande (10), dans lequel le type de matériel du poste téléphonique analogique et bidirectionnel (2) ou de l'amplificateur (7) peut être ajusté en tant que paramètre, en particulier à la manière de matériel.

33. Procédé selon la revendication 32, **caractérisé en ce que** les unités modules de connexion (8) présentent dans le réseau (6) le même logiciel pour les modules de commande (20) que pour les unités de connexion (1), dans lequel le type de matériel du poste téléphonique bidirectionnel IP (4) peut être ajusté en tant que paramètre, en particulier à la manière de matériel.

34. Procédé selon l'une quelconque des revendications 20 à 33, **caractérisé en ce que** l'unité de commande d'un module d'entrée/sortie (5) effectue le contrôle de l'alarme pour l'ensemble du système concernant le capteur connecté (31) ou l'acteur (32).

35. Procédé selon la revendication 34, **caractérisé en ce que** l'unité de commande du module d'entrée/sortie (5) effectue le contrôle des sorties de signaux vocaux en provenance d'une mémoire vocale (16, 26) en particulier dans le cas d'une alarme et effectue la signalisation d'alarme sur un ou plusieurs postes téléphoniques destinataires analogiques (2) ou des postes téléphoniques bidirectionnel IP (4).
